# EUROPÄISCHE PATENTANMELDUNG

(11) **EP 2 985 591 A1**
(43) Veröffentlichungstag der Anmeldung: **17.02.2016**
(21) Anmeldenummer: 15180847.4
(22) Anmeldetag: 13.08.2015
(51) Int. Cl.: G01N 21/15, G01F 23/292, G01B 11/25, G01F 17/00, G06Q 10/04

(54) **SYSTEM ZUR BESTIMMUNG DES FÜLLSTANDES EINES SCHÜTTGUTLAGERS**

(30) Priorität: 13.08.2014 DE 102014111550
(71) Anmelder: Inntal systemEnergie GmbH, 83543 Rott am Inn (DE)
(72) Erfinder: Obergrußberger, Rainer, 84568 Pleiskirchen (DE); Rieger, Roman, 83317 Teisendorf (DE)
(74) Vertreter: Lucke, Andreas

(57) **Zusammenfassung**

Bereitgestellt wird ein System zur Bestimmung des Füllstandes eines Schüttgutlagers. Das System umfasst ein Gehäuse mit einem transparenten Bereich und einem an der Außenseite des Gehäuses angebrachten Schieber, wobei der Schieber in einer ersten Position den transparenten Bereich abdeckt und in einer zweiten Position den transparenten Bereich nicht abdeckt. Das System umfasst ferner eine in dem Gehäuse angebrachte Einheit zum Aussenden von Licht durch den transparenten Bereich und ein in dem Gehäuse angeordnetes optisches Erfassungssystem. Das optische Erfassungssystem ist dazu eingerichtet, an einer Schüttgutoberfläche und/oder an Wänden eines Schüttgutlagers reflektiertes Licht zu erfassen und aus den erfassten Reflexionen Informationen über den Füllstand des Schüttgutlagers zu bestimmen.

## Beschreibung

### GEBIET DER ERFINDUNG

Die vorliegende Erfindung betrifft ein System zur Bestimmung des Füllstandes eines Schüttgutlagers. Insbesondere betrifft die vorliegende Erfindung ein System zur Bestimmung des Füllstandes eines Schüttgutlagers mittels eines optischen Erfassungssystems. Ferner betrifft die Erfindung ein Verfahren zur Planung einer Auslieferungsroute eines Fahrzeugs zur Auslieferung von Holz-Pellets. Insbesondere betrifft die Erfindung ein Verfahren zur Planung einer Auslieferungsroute eines Fahrzeugs zur Auslieferung von Holz-Pellets basierend auf Informationen über die Füllstände einer Vielzahl von Holz-Pellets-Lagern.

### HINTERGRUND

Zur Bestimmung des Füllstandes eines Schüttgutlagers sind aus dem Stand der Technik kapazitive (siehe beispielsweise EP2759812 A1) und mechanische Systeme (siehe beispielsweise EP2284502 A1) bekannt. Ferner sind aus dem Stand der Technik optische Systeme bekannt, die dazu eingerichtet sind, das Volumen von Schüttgut zu bestimmen (siehe beispielsweise EP1862795 A1).

Die bisher bekannten Systeme können jedoch nicht ohne weiteres bei der Messung des Füllstandes eines Schüttgutlagers verwendet werden, dessen Befüllung mit Staubentwicklung einhergeht und dessen Zugänglichkeit hinsichtlich Wartung stark eingeschränkt oder aufwändig ist.

Ferner sind aus dem Stand der Technik Verfahren zur Routenplanung bekannt. Die bisherigen Verfahren basieren jedoch ausschließlich auf Informationen, die von Betreibern von Holz-Pellets-Heizungsanlagen beispielsweise im Rahmen einer Bestellung geliefert werden und sind daher naturgemäß darauf beschränkt eine Auslieferungsroute im Hinblick auf die verfügbaren Informationen optimal zu planen.

Der vorliegenden Erfindung liegt die Aufgabe zugrunde, ein System bereitzustellen, welches eine präzise Messung des Füllstandes eines Schüttgutlagers mit geringem Wartungsaufwand ermöglicht, auch wenn die Befüllung des Schüttgutlagers mit Staubentwicklung einhergeht.

Diese Aufgabe wird durch ein System nach Anspruch 1 gelöst.

Ferner liegt der vorliegenden Erfindung die Aufgabe zu Grunde, Informationen bereitzustellen, die es ermöglichen, eine Auslieferungsroute eines Fahrzeugs zur Auslieferung von Holz-Pellets noch besser planen zu können.

Diese Aufgabe wird durch ein Verfahren nach Anspruch 8 gelöst.

Das System gemäß der vorliegenden Erfindung umfasst ein Gehäuse mit einem transparenten Bereich und einem an der Außenseite des Gehäuses angebrachten Schieber, wobei der Schieber in einer ersten Position den transparenten Bereich abdeckt und in einer zweiten Position den transparenten Bereich nicht abdeckt. In dem Gehäuse ist eine Einheit zum Aussenden von Licht durch den transparenten Bereich angebracht. Das an einer Schüttgutoberfläche und/oder an Wänden des Schüttgutlagers reflektierte Licht wird von einem in dem Gehäuse angeordneten optischen Erfassungssystem erfasst, wobei das optische Erfassungssystem dazu eingerichtet ist, aus den erfassten Reflexionen Informationen über den Füllstand des Schüttgutlagers zu bestimmen.

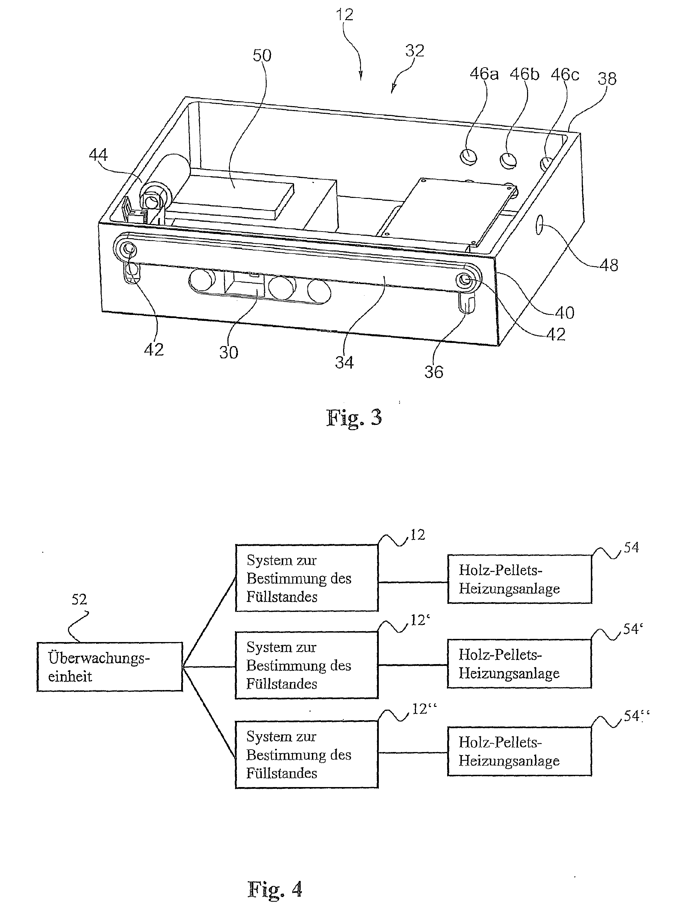

Durch den Schieber wird verhindert, dass der transparente Bereich des Gehäuses beim Einfüllen oder Austragen des Schüttguts durch aufgewirbelten Staub verschmutzt wird. Das durch den transparenten Bereich ausgesendete Licht wird an der Oberfläche des Schüttguts reflektiert. Der Abstand zwischen der Einheit zum Aussenden von Licht und dem optischen Erfassungssystem ermöglicht es, aus dem Winkel, unter dem die Reflektion empfangen wird, d. h. aus der Position der Reflexion in einer von dem optischen Erfassungssystem aufgenommenen Abbildung, die Distanz zur Reflexionsquelle zu berechnen. Die Distanzen zu den Reflexionspunkten ermöglichen es, aus der aufgenommenen Abbildung 3D-Informationen zu gewinnen. Wird das Schüttgutlager befüllt oder wird Schüttgut aus dem Schüttgutlager ausgetragen, ist dies anhand der 3D-Informationen nachvollziehbar und quantitativ bestimmbar.

Vorzugsweise ist die dem transparenten Bereich des Gehäuses zugewandte Seite des Schiebers dazu eingerichtet, auf dem transparenten Bereich zu gleiten und Schmutz von dem transparenten Bereich zu entfernen.

Das Gleiten auf dem transparenten Bereich führt dazu, dass Schmutz, wie beispielsweise Staub, durch den Schieber von dem transparenten Bereich abgewischt wird. Das Entfernen von Staub auf dem transparenten Bereich sorgt für eine gleichbleibend hohe Qualität der Messungen und verringert die Wartungsintervalle.

Vorzugsweise weist das System einen im Gehäuse angeordneten Stellantrieb auf, der dazu eingerichtet ist, zumindest ein magnetisches Element entlang der Innenseite des Gehäuses zu verfahren. Der Schieber weist vorzugsweise zumindest ein weiteres magnetisches Element auf, wobei der Schieber durch die magnetische Anziehungskraft zwischen dem zumindest einen magnetischen Element und dem zumindest einen weiteren magnetischen Element von der ersten in die zweite Position überführt wird und umgekehrt.

Die magnetische Kopplung des Schiebers an den im Gehäuse angeordneten Stellantrieb ermöglicht es, den Stellantrieb vor Verschmutzung und insbesondere vor Staub zu schützen ohne Öffnungen im Gehäuse vorzusehen, durch die Staub oder Feuchtigkeit in das Innere des Gehäuses eindringen könnten.

Vorzugsweise umfasst die in dem Gehäuse angebrachte Einheit zum Aussenden von Licht eine Laservorrichtung und/oder eine Optik zum Erzeugen von strukturiertem Licht.

Die Verwendung eines Lasers ermöglicht kleine, lichtstrake Reflexionspunkte, Linien und/oder ausgeleuchtete Bereiche, die die Genauigkeit der 3D-Informationen erhöhen. Die Verwendung einer Optik zum Erzeugen von strukturiertem Licht ermöglicht es, 3D-Informationen des gesamten Bereichs aus einer einzigen Abbildung zu gewinnen, da die Zuordnung zwischen Reflexionspunkt in der Abbildung und Abstrahlwinkel des im Reflexionspunkt reflektierten Lichtes beispielsweise über die Struktur des strukturierten Licht erfolgen kann, indem z. B. lokal unterschiedliche Muster erzeugt werden.

Vorzugsweise umfasst das System ferner eine weitere Einheit zum Aussenden von Licht durch den transparenten Bereich und das optische Erfassungssystem ist dazu eingerichtet, eine optische Erfassung des Schüttgutlagers anzufertigen.

Dies ermöglicht es, eine Kontrollabbildung bzw. ein Live-Bild anzufertigen, mit der bzw. mit dem die Informationen über den Füllstand des Schüttgutlagers, der Zustand des Schüttguts, sowie der Zustand des Schüttgutlagers überprüft werden können.

Vorzugsweise umfasst das System eine Einheit zum Übertragen der Informationen über den Füllstand des Schüttgutlagers und/oder der optischen Erfassung des Schüttgutlagers an eine Überwachungseinheit.

Die automatisierte Erfassung und Weiterleitung der Füllstandsinformationen ermöglicht es, das Befüllen des Schüttgutlagers und das Austragen von Schüttgut vorausschauend zu planen und die damit verbundene Logistik zu optimieren. Beispielsweise ist es möglich, bei Unterscheiten eines gewissen Mindestfüllstandes eine Befüllung des Schüttgutlagers einzuleiten. Da der Austrag von Schüttgut aus dem Schüttgutlager kontinuierlich ermittelt wird, kann eine Befüllungszeitspanne berechnet werden, in der die Befüllung einzuplanen ist, wodurch es möglich ist, andere Faktoren, wie beispielsweise Schüttguttransportmittel, mögliche Auslieferungsrouten, etc., in die Festlegung des Befüllungszeitpunktes miteinfließen zu lassen und somit den gesamten Logistikprozess zu optimieren.

Die optische Erfassung des Schüttgutlagers erlaubt es, Zusatzinformationen bereitzustellen, wie beispielsweise den Zustand des Schüttgutlagers oder den Zustand des Schüttgutes. So ist es beispielsweise möglich, zu kontrollieren, ob in einem Schüttgutlager eine Prallmatte, die die Wucht des eingefüllten Schüttguts bremsen soll, beschädigt ist. Ferner ist es möglich, die Füllstandsinformationen auf Plausibilität zu überprüfen und somit einen Systemfehler frühzeitig zu erkennen.

Vorzugsweise umfasst das System zur Ausrichtung des Systems relativ zum Schüttgutlager einen Punkt-Laser, welcher dazu eingerichtet ist, bei Betätigung eines an dem Gehäuse angebrachten Schalters einen Laserstrahl durch den transparenten Bereich auszusenden.

Der Punkt-Laser ermöglicht es, das System bei einer Installation ohne weitere Hilfsmittel auszurichten. Beispielsweise, indem der Punkt-Laser relativ zur Einheit zum Aussenden von Licht und dem optischen Erfassungssystem bereits so ausgerichtet ist, dass der zu überwachende Bereich dann optimal abgedeckt wird, wenn der Punkt-Laser in die Mitte des zu überwachenden Bereichs ausgerichtet ist.

Das Verfahren gemäß der vorliegenden Erfindung umfasst die Schritte des Empfangens, durch eine Überwachungseinheit, von Informationen über die Füllstände einer Vielzahl von Holz-Pellets-Lagern; des Bestimmens, durch die Überwachungseinheit, einer Auswahl an Holz-Pellets-Lagern, die das Fahrzeug anfahren und auffüllen soll, gemäß einer Vielzahl an Kriterien; und des Planens, durch die Überwachungseinheit, einer kürzesten und/oder schnellsten Route zum Anfahren und Auffüllen der Auswahl an Holz-Pellets-Lagern, vorzugsweise unter Berücksichtigung eines oder mehrerer weiterer Kriterien.

Die Kriterien umfassen beispielsweise, ob eine Gruppe der Holz-Pellets-Lager in einem vorbestimmten Radius liegen, oder ob die in die Holz-Pellets-Lager nachzufüllende Menge an Holz-Pellets mit einer Transportkapazität des Fahrzeugs übereinstimmt und ähnliches.

Vorzugsweise werden die Informationen über die Füllstände der Vielzahl von Holz-Pellets-Lagern von einer Vielzahl von Systemen zur Bestimmung des Füllstandes eines Holz-Pellets-Lagers empfangen, die jeweils ein Gehäuse mit einem transparenten Bereich und einem an der Außenseite des Gehäuses angebrachten Schieber, wobei der Schieber in einer ersten Position den transparenten Bereich verschließt und in einer zweiten Position den transparenten Bereich nicht verschließt; eine in dem Gehäuse angebrachte Einheit zum Aussenden von Licht durch den transparenten Bereich; ein in dem Gehäuse angeordnetes optisches Erfassungssystem, wobei das optische Erfassungssystem dazu eingerichtet ist, an einer Oberfläche von Holz-Pellets in einem Holz-Pellets-Lager und/oder an Wänden eines Holz-Pellets-Lagers reflektiertes Licht zu erfassen und aus den erfassten Reflexionen Informationen über den Füllstand des Holz-Pellets-Lagers zu bestimmen; und eine Einheit zum Übertragen der Informationen über den Füllstand des Holz-Pellets-Lagers an die Überwachungseinheit aufweisen.

Durch die Verwendung des Systems gemäß der vorliegenden Erfindung in dem Verfahren gemäß der vorliegenden Erfindung kann die Planung einer Auslieferungsroute eines Fahrzeugs zur Auslieferung von Holz-Pellets vollständig automatisiert werden und ermöglicht somit eine effizientere Planung, als es bei einer konventionellen Planung auf Basis von Bestelleingängen möglich wäre, da die relevanten Daten nicht erst zum Zeitpunkt des Bestelleingangs vorliegen, was den Planungshorizont deutlich vergrößert.

Vorzugsweise umfasst das Verfahren den weiteren Schritt des Sendens, durch die Überwachungseinheit, eines Abschaltbefehls an eine Holz-Pellets-Heizungsanlage zum Herunterfahren der Holz-Pellets-Heizungsanlage zu einem vorbestimmten Zeitpunkt vor dem Auffüllen eines Pellets-Lagers, aus dem die Holz-Pellets-Heizungsanlage gespeist wird.

Da Holz-Pellets-Heizungsanlagen vor der Befüllung des Pellets-Lagers gestoppt werden müssen, ermöglicht eine bidirektionale Verbindung, dass die Holz-Pellets-Heizungsanlage ohne manuelles Eingreifen eines Ansprechpartners vor Ort heruntergefahren werden kann, was die Effizienz des Verfahrens weiter steigert.

### KURZBESCHREIBUNG DER FIGUREN

Figur 1 zeigt eine schematische, perspektivische Ansicht eines in einem Schüttgutlager angeordneten Systems zur Bestimmung des Füllstandes des Schüttgutlagers, gemäß der vorliegenden Erfindung;
Figur 2a und 2b zeigen eine schematische, perspektivische Ansicht des Systems zur Bestimmung des Füllstandes eines Schüttgutlagers gemäß der vorliegenden Erfindung in zwei verschiedenen Betriebszuständen;
Figur 3 zeigt eine perspektivische Ansicht des Systems zur Bestimmung des Füllstandes eines Schüttgutlagers gemäß einem bevorzugten Ausführungsbeispiel; und
Figur 4 zeigt eine schematische Ansicht einer Vielzahl an Systemen zur Bestimmung des Füllstandes eines Holz-Pellets-Lagers, die mit einer Überwachungseinheit und einer Vielzahl an Holz-Pellets-Heizungsanlagen Signale austauschen.

### DETAILIERTE BESCHREIBUNG

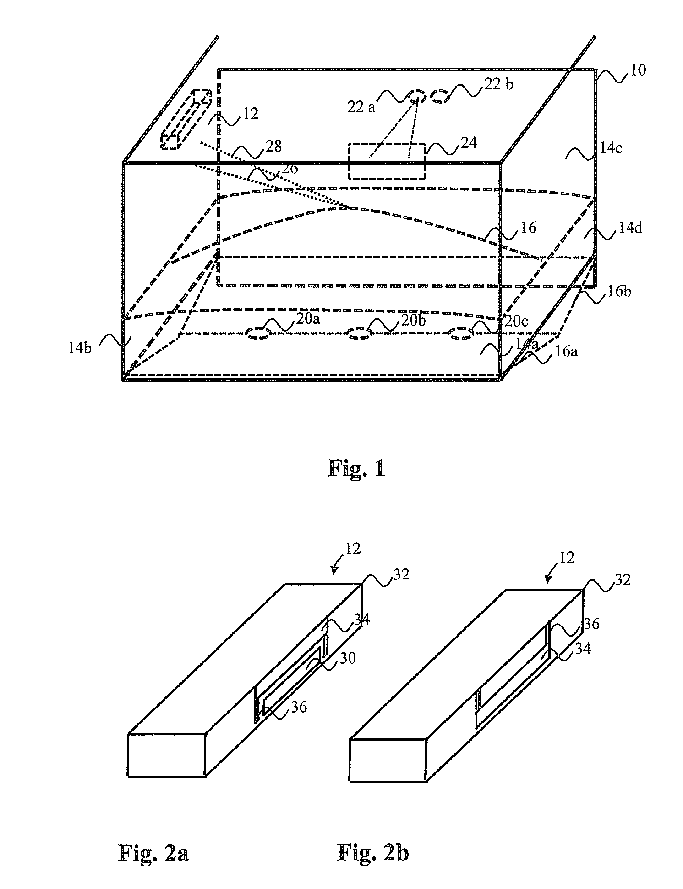

Figur 1 zeigt eine schematische, perspektivische Ansicht eines in einem Schüttgutlager 10 angeordneten Systems 12 zur Bestimmung des Füllstandes des Schüttgutlagers 10, gemäß der vorliegenden Erfindung. Das Schüttgutlager 10 eignet sich zur Befüllung mit jeglichen Schüttgütern und insbesondere zur Befüllung mit allen Arten von Pellets, wie beispielsweise Holzpellets oder Strohpellets sowie Holzhackschnitzel, Kunststoffgranulat oder auch Lebensmitteln wie Mais, Reis, Getreide, Kaffee oder ähnlichem.

Das Schüttgutlager 10 umfasst eine Bodenfläche und mehrere Seitenwände 14a, 14b, 14c, 14d, die zusammen mit einer Schüttgutoberfläche 16 das in dem Schüttgutlager 10 eingebrachte Schüttgut-Volumen definieren. Die Bodenfläche des Schüttgutlagers 10 besteht aus zwei, relativ zur Erdanziehung geneigten Platten 18a, 18b, deren Neigung so gewählt ist, dass das Schüttgut, wenn es an den geneigten Platten 18a, 18b abrutscht, in Richtung mehrerer Austragsstutzen 20a, 20b, 20c transportiert wird. Der Neigungswinkel der Platten 18a, 18b ist dabei in Abhängigkeit vom Schüttgut so gewählt, dass das Schüttgut beim Austragen des Schüttguts aus dem Schüttgutlager 10 ohne weiteres nachrutscht.

Zur Befüllung des Schüttgutlagers 10 umfasst das selbige einen Befüllstutzen 22a sowie einen Absaugstutzen 22b, welcher während des Befüllvorgangs Luft aus dem Schüttgutlager 10 absaugt, um Überdruck in dem Schüttgutlager 10 zu verhindern. Gegenüber dem Befüllstutzen 22a ist eine mechanische, Energie absorbierende Prallmattte 24 vorgesehen, die verhindert, dass das eingeblasene Schüttgut auf die Seitenwand 14a des Schüttgutlagers 10 auftrifft und dadurch beschädigt wird bzw. die Seitenwand 14a beschädigt.

Das System 12 zur Bestimmung des Füllstandes des Schüttgutlagers 10 ist dazu eingerichtet, Licht 26 auf die Schüttgutoberfläche 16 auszusenden und an der Schüttgutoberfläche 16 reflektierte Lichtstrahlen 28 zu erfassen. In einer Abbildung (z. B. einem Foto) der erfassten Reflexion manifestiert sich ein größerer Abstand zu einem Reflexionspunkt in einer Verschiebung der erfassten reflektierten Lichtstrahlen 28 in der Abbildung nach links, d. h. in Richtung der Seitenwand 14c. Somit kann jedem Reflexionspunkt ein Entfernungswert zum System 12 zugeordnet werden, wodurch eine Rekonstruktion der dreidimensionalen Schüttgutoberfläche 16 im Erfassungsbereich des Systems 12 möglich ist.

Ist die Geometrie des Schüttgutlagers 10 bekannt, beispielsweise indem sie mittels des Systems 12 bei leerem Schüttgutlager 10 vermessen wurde, kann aus der Rekonstruktion der dreidimensionalen Oberfläche des in das Schüttgutlager 10 eingebrachten Schüttguts auf den Füllstand des Schüttgutlagers 10 geschlossen werden. Die Ausrichtung des Systems 12 erfolgt dabei vorteilhafterweise so, dass der Erfassungsbereich des Systems 12 die gesamte Schüttgutoberfläche 16 überdeckt. Abweichend von der in Fig. 1 gezeigten Anordnung kann das System 12 dazu in einer der Ecken des Schüttgutlagers 10 angebracht sein. Je nach Geometrie des Schüttgutlagers 10 kann zudem die Seite des Systems 12, von der das Licht abgestrahlt wird, um einen vorbestimmten Winkel, beispielsweise zwischen 15° und 30°, 30° und 45° oder 45° und 60° zur Vertikalen, geneigt sein.

Wird nicht die gesamte Schüttgutoberfläche 16 von dem Erfassungsbereich des Systems 12 überdeckt, kann der Füllstand des Schüttgutlagers 10 aus der Rekonstruktion der dreidimensionalen Oberfläche eines Teils des Schüttguts aufgrund der Eigenschaft des Schüttguts, sich in dem Schüttgutlager 10 gleichmäßig zu verteilen, innerhalb Schüttgutabhängiger Genauigkeitsgrenzen geschätzt werden. Die Bestimmung des Füllstandes des Schüttgutlagers 10 kann insbesondere auch im Rahmen einer Inventur zu den jeweiligen Geschäftsjahren, Monatsbilanzen oder, wenn das Schüttgutlager 10 beispielsweise zur Lagerung von Holz-Pellets, Stroh-Pellets, Holzhackschnitzel oder anderem Heizmaterial dient, im Rahmen einer Inventur zu den jeweiligen Heizperioden verwendet werden. Dies ermöglicht eine erhebliche Personaleinsparung und ist zudem genauer als eine Schätzung auf Grund des optischen Eindrucks.

Figur 2a und 2b zeigen eine schematische, perspektivische Ansicht des Systems 12 zur Bestimmung des Füllstandes eines Schüttgutlagers gemäß der vorliegenden Erfindung in zwei verschiedenen Betriebszuständen. Im ersten Betriebszustand, wie in Fig. 2a gezeigt, ist ein transparenter Bereich 30 in dem Gehäuse 32 des Systems 12 durch einen an der Außenseite des Gehäuses angebrachten Schieber 34 nicht abgedeckt, so dass das System 12, wie in Fig. 1 gezeigt, Licht 26 auf die Schüttgutoberfläche 16 aussenden und an der Schüttgutoberfläche 16 reflektiertes Licht 28 erfassen kann. Im zweiten Betriebszustand, wie in Fig. 2b gezeigt, ist der transparente Bereich 30 des Gehäuses 32 des Systems 12 durch den Schieber 34 abgedeckt, so dass der transparente Bereich 30 vor Verschmutzung und Beschädigung geschützt ist.

Zur Überführung des Systems 12 vom ersten in den zweiten Betriebszustand weist das System 12 vorzugsweise zwei zu einer Seite des transparenten Bereichs 30 parallel verlaufende Führungen 36 auf, entlang derer der Schieber 34 von der Position, in der der Schieber 34 den transparenten Bereich 30 nicht abdeckt, in die Position, in der der Schieber 34 den transparenten Bereich 30 abdeckt und umgekehrt, verfahren werden kann.

Figur 3 zeigt eine perspektivische Ansicht des Systems 12 zur Bestimmung des Füllstandes eines Schüttgutlagers gemäß einem bevorzugten Ausführungsbeispiel. Das Gehäuse 32 des Systems 12 umfasst einen Unterteil 38 und einen Deckel (nicht gezeigt) sowie eine Frontscheibe 40 aus einem transparenten Material (beispielsweise Glas oder Plexiglas). Das Unterteil 38 und der Deckel des Gehäuses 32 sind im Betrieb miteinander dicht verschraubt, um Staub oder Feuchtigkeit am Eindringen in den Innenraum des Gehäuses 32 zu hindern. Die Frontscheibe 40 aus transparentem Material ist auf die Vorderseite des Unterteiles 38 des Gehäuses 32 aufgeklebt. Der auf der Frontscheibe 40 aus transparentem Material gleitende Schieber 34 ist über magnetische Elemente 42 an einen im Gehäuse 32 angeordneten Stellantrieb 44 gekoppelt, welcher die vertikale Bewegung des Schiebers 34 antreibt.

Zum Verfahren des Schiebers 34 umfasst das System 12 zwei Führungsnuten 36, die parallel zu einer Seite des transparenten Bereichs 30 verlaufen und durch Aussparungen in der Vorderseite des Unterteils 38 des Gehäuses 32 gebildet werden, die durch die auf die Vorderseite des Unterteils 38 des Gehäuses 32 aufgeklebte Frontscheibe 40 aus transparentem Material gegen die Umgebung des Systems 12 abgeschlossen sind. In den Führungsnuten 36 gleiten an den Stellantrieb 44 mechanisch gekoppelte Magnete. Der Schieber 34 weist zu den Magneten korrespondierende magnetische Elemente 42 auf, so dass der Schieber 34 durch die magnetische Anziehungskraft zwischen den in den Führungsnuten 36 gleitenden Magneten und den auf der Frontscheibe 40 aus transparentem Material gleitenden magnetischen Elementen 42 von der ersten in die zweite Position verfahren werden kann und umgekehrt.

Die der Frontscheibe 40 zugewandte Seite des Schiebers 34 weist ferner eine Mikrofaserschicht auf, so dass die Frontscheibe 40 bei jedem Verfahren des Schiebers 34 von

Staub gereinigt wird und zugleich beim Verfahren des Schiebers 34 nur ein geringer Gleitreibungswiderstand auftritt. Ebenso weisen die an der Innenseite des transparenten Materials in den Führungsnuten 36 gleitenden Magnete eine Mikrofaserschicht auf, so dass beim Verfahren der Magnete nur ein geringer Gleitreibungswiderstand auftritt.

Auf der Rückseite des Gehäuses 36 sind Aussparungen 46a, 46b, 46c für Strom-, und Signalleitungen vorgesehen. An beiden Seiten des Gehäuses 36 ist eine Gewindebohrung 48 vorgesehen. Die Gewindebohrung 48 dient der Montage des Systems 12 an einer verstellbaren Halterung zum Neigen und/oder Schwenken des Systems 12.

Das System 12 umfasst zudem eine im Gehäuse 32 angebrachte Vorrichtung 50 umfassend eine Einheit zum Aussenden von Licht durch den transparenten Bereich 30, der durch eine Aussparung im Gehäuse 32 und die auf den Unterteil 38 des Gehäuses 32 aufgeklebte Frontscheibe 40 gebildet wird, und ein optisches Erfassungssystem, wobei das optische Erfassungssystem dazu eingerichtet ist, das an der Schüttgutoberfläche und/oder den Wänden des Schüttgutlagers 10 reflektierte Licht der Einheit zum Aussenden von Licht durch den transparenten Bereich 30 zu erfassen. Dazu umfasst das optische Erfassungssystem einen optischen Sensor, beispielsweise einen CCD- oder CMOS-Sensor, der innerhalb des Gehäuses 32, hinter dem transparenten Bereich 30, in einem vorbestimmten Abstand zu der Einheit zum Aussenden von Licht angeordnet ist.

Die Einheit zum Aussenden von Licht umfasst eine Laservorrichtung und eine Optik, die es erlaubt, strukturiertes Licht zu erzeugen. Strukturiertes Licht ermöglicht es, einen Reflexionspunk, Reflexionsstreifen, etc. dem Lichtstrahlbündel zuzuordnen, durch das er erzeugt wurde, beispielsweise mittels lokal unterschiedlicher Muster der ausgesendeten Lichtstrahlen. Nach erfolgter Zuordnung zwischen ausgesendeten Lichtstrahlen und den dazugehörigen Reflexionen in der Abbildung, kann die dreidimensionale Lages jedes Reflexionspunktes im Raum bestimmt werden. Aus dem die Schüttgutoberfläche 16 überziehenden Punktnetz kann dann der Füllstand des Schüttgutlagers 10 bestimmt werden.

Das System 12 umfasst zudem einen Punkt-Laser, welcher durch Drücken einer Taste am Gehäuse 32 aktiviert werden kann und die Zielrichtung der 3D-Erfassung angibt. Dazu ist der Punkt-Laser so ausgerichtet, dass der von dem Punkt-Laser durch den transparenten Bereich 30 ausgesandte Laserstrahl durch das Zentrum des Erfassungsbereichs orientiert ist. Somit kann das System 12 dadurch ausgerichtet werden, dass der Punkt-Laser auf die Mitte des zu erfassenden Bereichs zeigt.

Das System 12 umfasst ferner eine Einheit zum Übertragen der Informationen über den Füllstand des Schüttgutlagers 10 und der optischen Erfassung des Schüttgutlagers an eine Überwachungseinheit. Die Einheit zum Übertragen der Informationen über den Füllstand des Schüttgutlagers ist dazu an ein lokales Netzwerk (LAN) angeschlossen. Die Verbindung zu dem lokalen Netzwerk kann drahtlos oder drahtgebunden erfolgen, beispielsweise über WLAN oder eine Ethernet-Verbindung.

Figur 4 zeigt eine schematische Ansicht einer Vielzahl an Systemen 12, 12', 12" zur Bestimmung des Füllstandes eines Holz-Pellets-Lagers, die mit einer Überwachungseinheit 52 und einer Vielzahl an Holz-Pellets-Heizungsanlagen 54, 54', 54" Signale austauschen, gemäß der vorliegenden Erfindung. Es wird darauf hingewiesen, dass obwohl im Folgenden durchgängig von Holz-Pellets und Holz-Pellets-Lagern die Rede ist, die offenbarte Lehre ebenso auf beliebige andere Schüttgüter und Schüttgutlager anwendbar ist, wie sie in Zusammenhang mit Fig. 1 bis 3 beschrieben wurden.

Gemäß der vorliegenden Erfindung empfängt die Überwachungseinheit 52 Informationen über die Füllstände einer Vielzahl von Holz-Pellets-Lagern. Dazu führt beispielsweise jedes System 12. 12', 12" in einem regelmäßigen Intervall einen 3D-Scan des Holz-Pellets-Lagers durch und bestimmt daraus einen Füllstand des Holz-Pellets-Lagers und sendet diese Informationen über das Internet an die Überwachungseinheit 52. Aus den von der Überwachungseinheit empfangenen Informationen bestimmt die Überwachungseinheit 52 einer Auswahl an Holz-Pellets-Lagern, die ein Fahrzeug anfahren und auffüllen soll, gemäß einer Vielzahl an Kriterien.

Beispielsweise kann die Überwachungseinheit 52 die zu befüllenden Holz-Pellets-Lager in Gruppen einteilen, wobei in jeder Gruppe jene Holz-Pellets-Lager angeführt sind, die in geringer Entfernung zueinander liegen. Ist der Bedarf der Holz-Pellets-Lager einer Gruppe kleiner als die Kapazität eines Fahrzeugs zum Ausliefern der Holz-Pellets, können noch weitere Holz-Pellets-Lager in die Gruppe aufgenommen werden, die zwar keinen akuten Befüllungs-Bedarf haben, aber freie Kapazitäten aufweisen und somit mit aufgefüllt werden können. Alternativ kann die Befüllung einer Gruppe an Holz-Pellets-Lagern, deren Bedarf kleiner als die Kapazität des Fahrzeugs ist, sofern jedes der Holz-Pellets-Lager noch ausreichend befüllt ist, zurückgestellt werden, bis der Bedarf soweit gestiegen ist, dass der Bedarf die Kapazität deckt oder bis die Befüllung eines oder mehrere Holz-Pellets-Lager keinen weiteren Aufschub duldet.

Die Überwachungseinheit 52 kann in die Routenplanung auch vertragliche Vorgaben wie einen Rahmenvertrag, der eine Befüllung zu jedem Zeitpunkt zulässt oder eine Vorgabe, dass jede Befüllung einzeln vereinbart werden muss, in die Planung miteinbeziehen. Ferner kann die Überwachungseinheit nach erfolgter Befüllung automatisch eine Rechnung generieren, oder die Befüllungsdaten für eine automatisch generierte Sammelrechnung zu einem bestimmten Zeitpunkt speichern.

Die Überwachungseinheit 52 plant zum Anfahren und Auffüllen der Auswahl an Holz-Pellets-Lagern eine kürzeste und/oder schnellste Route vorzugsweise unter Berücksichtigung weiterer Kriterien. Als weiteres Kriterium kommt insbesondere die Anwesenheit eines Ansprechpartners vor Ort in Betracht, der die Anlage eine Stunde vor Befüllung abschaltet und gegebenenfalls Zugang zum Einfüllstutzen ermöglicht.

Alternativ kann die Überwachungseinheit 52 einen Abschaltbefehl zum Herunterfahren einer Holz-Pellets-Heizungsanlage 54, 54', 54" zu einem vorbestimmten Zeitpunkt vor dem Auffüllen eines Holz-Pellets-Lagers, aus dem die Holz-Pellets-Heizungsanlage 54, 54', 54" gespeist wird, an die Holz-Pellets-Heizungsanlage 54, 54', 54" senden. Beispielsweise kann die Überwachungseinheit 52 über das Internet mit dem System 12 eine Verbindung aufbauen und ein Signal an das System 12 senden, dass die Holz-Pellets-Heizungsanlage 54 zu einem vorbestimmten Zeitpunkt abzuschalten ist. Das System 12 kann den Erhalt dieses Signals bestätigen und im vorbestimmten Zeitpunkt der mit dem System 12 verbundenen Holz-Pellets-Heizungsanlage 54 ein Signal senden, auf Grund dessen sich die Holz-Pellets-Heizungsanlage 54 abschaltet. Genauso kann die Überwachungseinheit 52 mit dem System 12 über das Internet eine Verbindung aufbauen und ein Signal an das System 12 senden, dass die Holz-Pellets-Heizungsanlage 54 wieder einzuschalten ist, beispielsweise wenn eine Befüllung des Holz-Pellets-Lagers, aus dem die Pellets-Heizungsanlage 54 gespeist wird, abgeschlossen ist.

Zudem kann auch die Holz-Pellets-Heizungsanlage 54 beim Ansaugen von Holz-Pellets aus dem Holz-Pellets-Lager ein Signal an das System 12 senden, während des Ansaugvorgangs und eine vorbestimmte Zeitspanne nach dem Ansaugvorgang, den Schieber 32 geschlossen zu halten, damit der transparente Bereich 30 nicht durch beim Ansaugvorgang aufgewirbelten Holzstaub verschmutzt wird.

Ferner kann das System 12 den Verbrauch der Holz-Pellets-Heizungsanlage 54 während eines vorgegebenen Zeitraums speichern. Die gespeicherten Daten können dazu verwendet werden, einen Wartungszeitpunkt der Holz-Pellets-Heizungsanlage 54 festzulegen, beispielsweise indem gemessen wird, wann die Holz-Pellets-Heizungsanlage 54 eine vorbestimmte Masse an Holz-Pellets verbraucht hat. Der Wartungszeitpunkt kann, ebenso wie der aktuelle Füllstand, direkt an der Holz-Pellets-Heizungsanlage 54 angezeigt werden. Alternativ können Informationen über den Verbrauch der Holz-Pellets-Heizungsanlage 54 auch an die Überwachungseinheit 52 übertragen werden, so dass die Überwachungseinheit 52 einen Wartungszeitpunkt bestimmt. Wie vor einer Befüllung, kann die Überwachungseinheit 52 auch vor eine Wartung der Holz-Pellets-Heizungsanlage 54 diese automatisch per Signal herunterfahren.

Da der Staubanteil der Holz-Pellets die Qualität der Bestimmung durch das optische Erfassungssystem verbessert, da er Staub eine diffuse und somit in alle (möglichen) Raumrichtungen gleichmäßigere Reflexion auf der Oberfläche der Holz-Pellets begünstigt, kann aus der Qualität der Messungen auf den Staubanteil der Holz-Pellets und somit auf die Qualität der Holz-Pellets geschlossen werden. Der Grad der Verstaubung kann zudem als Parameter für die Länger der Wartungsintervalle als auch als Indikator für eine Reinigung des Holz-Pellets-Lagers verwendet werden. Dazu können die Informationen über den Staubanteil der Holz-Pellets an die Überwachungseinheit 52 gesendet werden oder lokal an der Holz-Pellets-Heizungsanlage 54 angezeigt werden.

Ferner kann die optische Erfassung des Holz-Pellets-Lagers an die Überwachungseinheit 52 gesendet werden und von der Überwachungseinheit 52 angefordert werden, so dass jederzeit ein Live-Bild des Holz-Pellets-Lagers zur Verfügung steht, beispielsweise um die Aufhängung der Prallmatte nach Befüllung des Holz-Pellets-Lagers zu kontrollieren oder die Informationen über den Füllstand des Holz-Pellets-Lagers zu überprüfen.

### BEZUGSZEICHENLISTE

- 10: Schüttgutlager
- 12, 12', 12": Systeme
- 14 a-d: Seitenwände
- 16: Schüttgutoberfläche
- 18 a, b: Platten
- 20 a-c: Austragsstutzen
- 22a: Befüllstutzen
- 22b: Absaugstutzen
- 24: Prallmatte
- 26: Licht
- 28: Lichtstrahl
- 30: transparenter Bereich
- 32: Gehäuse
- 34: Schieber
- 36: Führungen, Führungsnuten
- 38: Unterteil
- 40: Frontscheibe
- 42: magnetische Elemente
- 44: Stellantrieb
- 46 a-c: Aussparungen
- 48: Gewindebohrung
- 50: Vorrichtung
- 52: Überwachungseinheit
- 54, 54', 54": Holz-Pellets-Heizungsanlagen

## Patentansprüche

1. System (12) zur Bestimmung des Füllstandes eines Schüttgutlagers (10), wobei das System (12) umfasst:
ein Gehäuse (32) mit einem transparenten Bereich (30) und einem an der Außenseite des Gehäuses (32) angebrachten Schieber (34), wobei der Schieber (34) in einer ersten Position den transparenten Bereich (30) abdeckt und in einer zweiten Position den transparenten Bereich nicht abdeckt;
eine in dem Gehäuse (32) angebrachte Einheit zum Aussenden von Licht durch den transparenten Bereich (30); und
ein in dem Gehäuse (32) angeordnetes optisches Erfassungssystem, wobei das optische Erfassungssystem dazu eingerichtet ist, an einer Schüttgutoberfläche (16) und/oder an Wänden eines Schüttgutlagers (14 a-d) reflektiertes Licht zu erfassen und aus den erfassten Reflexionen Informationen über den Füllstand des Schüttgutlagers (10) zu bestimmen.

2. System zur Bestimmung des Füllstandes eines Schüttgutlagers (10) nach Anspruch 1, wobei die dem transparenten Bereich (30) des Gehäuses (32) zugewandte Seite des Schiebers (34) dazu eingerichtet ist, auf dem transparenten Bereich (30) zu gleiten und Schmutz von dem transparenten Bereich (30) zu entfernen.

3. System (12) zur Bestimmung des Füllstandes eines Schüttgutlagers (10) nach einem der Ansprüche 1 oder 2, wobei das System (12) einen im Gehäuse (32) angeordneten Stellantrieb (44) aufweist, der dazu eingerichtet ist, zumindest ein magnetisches Element entlang der Innenseite des Gehäuses (32) zu verfahren und der Schieber (34) zumindest ein weiteres magnetisches Element (42) aufweist, wobei der Schieber (34) durch die magnetische Anziehungskraft zwischen dem zumindest einen magnetischen Element und dem zumindest einen weiteren magnetischen Element (42) von der ersten in die zweite Position überführt wird und umgekehrt.

4. System (12) zur Bestimmung des Füllstandes eines Schüttgutlagers (10) nach einem der vorangehenden Ansprüche, wobei die in dem Gehäuse (32) angebrachte Einheit zum Aussenden von Licht eine Laservorrichtung und/oder eine Optik zum Erzeugen von strukturiertem Licht umfasst.

5. System (12) zur Bestimmung des Füllstandes eines Schüttgutlagers (10) nach einem der vorangehenden Ansprüche, wobei das System (12) ferner eine weitere Einheit zum Aussenden von Licht durch den transparenten Bereich umfasst und wobei das optische Erfassungssystem dazu eingerichtet ist, eine optische Erfassung des Schüttgutlagers (10) anzufertigen.

6. System (12) zur Bestimmung des Füllstandes eines Schüttgutlagers (10) nach einem der vorangehenden Ansprüche, wobei das System (12) eine Einheit zum Übertragen der Informationen über den Füllstand des Schüttgutlagers (10) und/oder der optischen Erfassung des Schüttgutlagers (10) an eine Überwachungseinheit (52) umfasst.

7. System (12) zur Bestimmung des Füllstandes eines Schüttgutlagers (10) nach einem der vorangehenden Ansprüche, wobei das System (12) zur Ausrichtung des Systems (12) relativ zum Schüttgutlager (10) einen Punkt-Laser umfasst, welcher dazu eingerichtet ist, bei Betätigung eines an dem Gehäuse (32) angebrachten Schalters einen Laserstrahl durch den transparenten Bereich (30) auszusenden.

8. Verfahren zur Planung einer Auslieferungsroute eines Fahrzeugs zur Auslieferung von Holz-Pellets, umfassend die Schritte:
Empfangen, durch eine Überwachungseinheit (52), von Informationen über die Füllstände einer Vielzahl von Holz-Pellets-Lagern;
Bestimmen, durch die Überwachungseinheit (52), einer Auswahl an Holz-Pellets-Lagern, die das Fahrzeug anfahren und auffüllen soll, gemäß einer Vielzahl an Kriterien;
Planen, durch die Überwachungseinheit (52), einer kürzesten und/oder schnellsten Route zum Anfahren und Auffüllen der Auswahl an Holz-Pellets-Lagern, vorzugsweise unter Berücksichtigung eines oder mehrerer weiterer Kriterien.

9. Verfahren zur Planung einer Auslieferungsroute eines Fahrzeugs zur Auslieferung von Holz-Pellets nach Anspruch 8, wobei die Informationen über die Füllstände der Vielzahl von Holz-Pellets-Lagern von einer Vielzahl von Systemen (12) zur Bestimmung des Füllstandes eines Holz-Pellets-Lagers empfangen wurden, die jeweils folgendes aufweisen:
ein Gehäuse (32) mit einem transparenten Bereich (30) und einem an der Außenseite des Gehäuses (32) angebrachten Schieber (34), wobei der Schieber (34) in einer ersten Position den transparenten Bereich (30) abdeckt und in einer zweiten Position den transparenten Bereich nicht abdeckt;
eine in dem Gehäuse (32) angebrachte Einheit zum Aussenden von Licht durch den transparenten Bereich (30);
ein in dem Gehäuse (32) angeordnetes optisches Erfassungssystem, wobei das optische Erfassungssystem dazu eingerichtet ist, an einer Oberfläche von Holz-Pellets und/oder an Wänden eines Holz-Pellets-Lagers reflektiertes Licht zu erfassen und aus den erfassten Reflexionen Informationen über den Füllstand des Holz-Pellets-Lagers zu bestimmen; und
eine Einheit zum Übertragen der Informationen über den Füllstand des Holz-Pellets-Lagers an die Überwachungseinheit (52).

10. Verfahren zur Planung einer Auslieferungsroute eines Fahrzeugs zur Auslieferung von Holz-Pellets nach einem der Ansprüche 8 oder 9, mit dem weiteren Schritt,
Senden, durch die Überwachungseinheit (52), eines Abschaltbefehls an eine Holz-Pellets-Heizungsanlage (54) zum Herunterfahren der Holz-Pellets-Heizungsanlage (54) zu einem vorbestimmten Zeitpunkt vor dem Auffüllen eines Holz-Pellets-Lagers, aus dem die Holz-Pellets-Heizungsanlage (54) gespeist wird.
